# FASCICULE DE BREVET EUROPEEN

(11) **EP 3 862 155 B1**
(45) Date de publication et mention de la délivrance du brevet: **03.04.2024**
(21) Numéro de dépôt: 21155370.6
(22) Date de dépôt: 05.02.2021
(51) Int. Cl.: B28B 1/00, B28B 7/22, B28B 17/00, B28B 19/00, E04G 21/04, B33Y 10/00, B33Y 50/00, E01D 21/00

(54) **PROCEDE DE FABRICATION D'ELEMENTS DE STRUCTURE EN MATERIAU CIMENTAIRE**
VERFAHREN ZUR HERSTELLUNG VON STRUKTURELEMENTEN AUS ZEMENTMATERIAL
METHOD FOR MANUFACTURING STRUCTURAL ELEMENTS FROM CEMENT MATERIAL

(30) Priorité: 07.02.2020 FR 2001211
(43) Date de publication de la demande: 11.08.2021
(73) Titulaire: Soletanche Freyssinet, 92500 Rueil Malmaison (FR)
(72) Inventeur: RICARD, Jean-Philippe, 78620 L'ETANG LA VILLE (FR); FABRY, Nicolas, 92160 ANTONY (FR); STUBLER, Jérôme, 75016 PARIS (FR)
(74) Mandataire: Cabinet Nony

(56) Documents cités:
- EP-A1- 3 604 706
- US-A1- 2019 292 803
- US-A1- 2019 329 447

## Description

La présente invention concerne le domaine des structures en matériau cimentaire préfabriquées. Elle concerne notamment un procédé de fabrication, au moyen d'une technique d'impression 3D, d'éléments de structure qui sont destinés, après assemblage, à former une structure en matériau cimentaire, par exemple un bâtiment ou tout autre ouvrage de génie civil.

Les éléments de structure préfabriquées par impression 3D sont obtenus par dépôt de cordons de matériau cimentaire frais, en couches successives les unes sur les autres. Les techniques d'impression 3D mettent en oeuvre un dispositif comportant un robot muni d'un bras articulé pourvu à son extrémité d'une buse d'impression, et un ordinateur dans la mémoire duquel sont chargés un modèle numérique 3D représentant l'élément de structure à fabriquer ainsi qu'un logiciel pour piloter le robot de manière à déposer les cordons de matériau cimentaire en couches successives jusqu'à la formation de l'élément de structure recherché.

L'impression 3D autorise la fabrication de structures de forme complexe qui ne peuvent pas être produites par des techniques classiques de coulage de matériau cimentaire en coffrage. Pour une structure présentant une dimension supérieure à 10 m, par exemple une poutre de longue portée, un tablier de pont, une pile de pont, un tronçon de tour, voire la tour complète, la mise en oeuvre de l'impression 3D est facilitée en segmentant la structure en éléments de structure individuels, et en préfabriquant en atelier ou en usine chacun des éléments de structure séparément les uns des autres. Ces éléments de structure sont ensuite assemblés sur le site de construction pour former la structure.

Ainsi, la mise en oeuvre d'un tel procédé suppose que chaque élément de structure présente une résistance mécanique telle que prévue dans la note de calcul du projet de construction, notamment en ce qui concerne la résistance des joints entre les éléments de structure au sein de la structure assemblée. Par ailleurs, la fabrication en atelier favorise la maîtrise de la qualité d'impression du matériau cimentaire. Elle permet de contrôler la prise, la cure, le retrait et le fluage du matériau cimentaire, et aide à respecter les tolérances dimensionnelles prévues.

Une attention particulière est apportée aux faces de l'élément de structure qui sont destinées à être chacune en regard d'un élément de structure adjacent. Les tolérances dimensionnelles associées à ces faces sont faibles, pour garantir notamment que l'axe d'extension de la structure assemblée soit le plus proche possible de celui prévu dans le projet. En pratique, le respect de ces tolérances peut nécessiter la mise en oeuvre longue et coûteuse de moyens de rectification. En particulier, un usinage de haute précision des faces de l'élément de structure peut être nécessaire. Par ailleurs, au cours de l'assemblage des éléments de structure, un ajustement précis, par exemple de quelques millimètres seulement, de la position des éléments de structure les uns par rapport aux autres, peut être requis pour respecter les tolérances d'ensemble de la structure. Un tel ajustement est relativement long et particulièrement difficile, parfois même impossible, à mettre en oeuvre sur le site de construction.

Par ailleurs, le non-respect des tolérances dimensionnelles prévues pour chaque élément de structure peut aboutir, lors de l'assemblage de la structure, à une situation non conforme qui peut impliquer l'insertion de cales dans les joints entre les éléments de structure, afin de respecter les tolérances d'ensemble de cette dernière. Par ailleurs, le fonctionnement mécanique des joints peut s'en trouver pénalisé.

La demande de brevet US 2019/329447 A1 décrit un procédé de réalisation d'une structure en matériau cimentaire comprenant une étape de production de plusieurs éléments de structure par impression 3D.

Il existe donc un besoin pour faciliter la fabrication d'éléments de structure par impression 3D et l'assemblage de ces éléments de structure.

L'invention vise à répondre à ce besoin et concerne un procédé de production d'une pluralité d'éléments de structure, en vue de former après assemblage au moins une partie d'une structure, le procédé comportant:
a) la production d'un premier élément de structure comportant l'impression 3D d'un premier corps en matériau cimentaire,
b) la production d'un deuxième élément de structure au contact du premier élément de structure, comportant l'impression 3D d'un deuxième corps en matériau cimentaire,
   les premier et deuxième éléments de structure présentant des faces en regard, respectivement dénommées « première face » et « deuxième face », de formes complémentaires, et
c) la séparation des premier et deuxième éléments de structure.

L'invention permet une meilleure maîtrise des tolérances de fabrication et peut éviter, sinon limiter, la nécessité de procéder à des opérations de rectification.

### Première et deuxième faces

Les première et deuxième faces sont de préférence généralement perpendiculaires à l'axe d'extension de la structure obtenue par assemblage des éléments de structure. Ainsi, la fabrication des éléments de structure en orientant verticalement leur axe d'extension peut résulter en la formation de première et deuxième faces qui s'étendent horizontalement. Une telle orientation facilite la réalisation des éléments.

De préférence, le deuxième élément de structure est fabriqué sur le premier élément de structure. La fabrication des deux éléments de structure l'un sur l'autre facilite leur séparation et la bonne conjugaison des faces en contact.

Les première et deuxième faces peuvent présenter une forme générale plane, et peuvent optionnellement présenter un ou plusieurs reliefs, par exemple des clés de cisaillement.

De préférence, l'une des première et deuxième faces présente un relief en saillie logé dans un relief en creux de l'autre des première et deuxième faces. L'imbrication des premier et deuxième éléments de structure l'un dans l'autre est facilitée au cours de l'assemblage de la structure. Une telle clé de cisaillement contribue à augmenter la résistance mécanique de la structure et la transmission des efforts entre les éléments de structure.

Le relief en creux peut présenter une profondeur comprise entre 1 cm et 20 cm. Le relief en creux peut être une rainure qui peut s'étendre selon un trajet rectiligne ou curviligne. Par exemple, la rainure présente une longueur comprise entre 5 cm et 50 cm et/ou une largeur comprise entre 1 cm et 20 cm. Il peut être de forme hémisphérique concave.

Le relief en saillie est de préférence de forme complémentaire au relief en creux. Il peut présenter une hauteur comprise entre 1 cm et 20 cm. Il se présente par exemple sous la forme d'un bossage, ou sous une forme prismatique, parallélépipédique, pyramidale, notamment tronquée. Il peut être de forme hémisphérique convexe.

Le relief en creux et le relief en saillie ont de préférence une forme d'une dépouille, pour faciliter la séparation sans endommagement des premier et deuxième éléments de structure à l'étape c).

La forme, le nombre et la répartition des reliefs sur les première et deuxième faces peuvent être choisis au regard de la résistance mécanique. Par exemple, la première face présente plusieurs reliefs en creux ou plusieurs reliefs en saillie et la deuxième face présente des reliefs correspondants de formes complémentaires. En variante, la première face présente au moins un relief en creux et au moins un relief en saillie, et la deuxième face présente des reliefs correspondants de formes complémentaires.

### Impression 3D du premier corps

Les étapes a) et b) mettent en oeuvre une technique d'impression 3D d'un matériau cimentaire pour fabriquer respectivement un premier corps et un deuxième corps.

Le matériau cimentaire est de préférence un béton.

Le matériau cimentaire présente à l'état frais des propriétés, notamment rhéologiques et de prise, adaptées à l'impression 3D. En particulier, le matériau cimentaire peut être choisi parmi un béton à hautes performances, connu sous l'acronyme BHP, un béton fibré, connu sous l'acronyme BF, ou un béton fibré à ultra hautes performance, connu sous l'acronyme BFUHP.

La fabrication du premier et du deuxième corps est effectuée au moyen d'un dispositif d'impression 3D. Le dispositif d'impression 3D peut comporter un robot comportant une base fixée sur un bâti, un bras articulé mobile par rapport à la base. Il peut comporter une buse d'impression portée par le bras articulé, pour déposer le matériau cimentaire frais.

Le dispositif d'impression 3D peut comporter une cuve comportant le matériau cimentaire frais et une pompe pour alimenter la buse d'impression en matériau cimentaire frais en provenance de la cuve.

Le dispositif d'impression 3D peut comporter une unité de pilotage du robot, l'unité de pilotage comportant un ordinateur ayant une mémoire dans laquelle est chargé un programme comportant des instructions pour piloter le robot et un processeur pour exécuter les instructions.

Le premier corps et/ou le deuxième corps peuvent être creux et/ou présenter des passages pour des câbles ou des armatures métalliques afin d'introduire des contraintes dans la structure.

La longueur du premier corps et/ou la longueur du deuxième corps, mesurées selon l'axe d'extension de la structure, peut être comprise entre 0,5 m et 5 m.

Le dépôt du matériau cimentaire frais pour fabriquer les premier et deuxième corps aux étapes a) et b) comporte de préférence le dépôt de cordons de matériau cimentaire frais en couches successives, de préférence sensiblement horizontales, les unes sur les autres.

À l'étape a), l'impression 3D du premier corps peut comporter le dépôt du matériau cimentaire frais sur un support d'impression.

Le support d'impression présente une rigidité suffisante pour que sa déformation sous l'effet du poids des premier et deuxième éléments de structures soit faible au regard des tolérances de fabrication de ces éléments de structure.

Afin de produire un premier corps en matériau cimentaire armé, une armature et/ou une gaine destinée à recevoir une telle armature peut être disposée préalablement sur le support d'impression, et le matériau cimentaire frais est imprimé sur l'armature ou la gaine pour immerger celle(s)-ci dans le matériau cimentaire.

L'armature peut être maintenue sous contrainte au cours de l'impression du matériau cimentaire frais, puis après prise du matériau cimentaire, l'armature est relâchée afin d'introduire des contraintes, notamment de compression, dans le corps.

L'impression 3D du premier corps peut comporter le dépôt du matériau cimentaire frais de manière à former le relief en creux ou en saillie de la première face.

### Finition de la première face

Pour obtenir une première face ayant un état de surface prévu dans les tolérances dimensionnelles recherchées, la production du premier élément peut comporter une étape de finition de la première face. La finition assure une bonne complémentarité de forme entre la première face et la deuxième face. Une telle complémentarité favorise le bon fonctionnement mécanique du joint constitué.

L'état de surface de la première face peut être lisse ou être formé de micro-facettes, par exemple formant un réseau périodique selon au moins une direction.

En particulier, la finition peut être menée pour que la première face présente une rugosité sensiblement identique à celle d'une surface de matériau cimentaire décoffrée d'un coffrage en bois ou en métal.

Dans un mode de mise en oeuvre, le premier corps venu d'impression 3D présente une face au contact de laquelle le deuxième élément de structure est formé. La première face est alors ladite face du premier corps. En variante, cette face de contact est définie par une peau rapportée sur le corps, comme détaillé plus loin.

La finition peut comporter le déplacement d'un outil lisseur sur la première face, au contact du matériau cimentaire frais. L'outil lisseur est par exemple une spatule, par exemple de type langue de chat. Elle peut être déplacée manuellement sur la première face par un opérateur. De préférence, la spatule est portée par le bras articulé d'un robot, dont le déplacement est commandé par l'unité de pilotage du dispositif d'impression 3D.

La finition peut comporter le déplacement d'un outil d'usinage, par exemple une meule de rectification, sur la première face, au contact du matériau cimentaire ayant pris.

En variante, comme mentionné ci-dessus, le premier élément de structure comporte une peau. La finition peut comporter l'application de la peau sur une face du premier corps en matériau cimentaire, la peau recouvrant au moins partiellement, voire totalement la face du premier corps. La peau présente ainsi une face au contact du premier corps et une face opposée qui correspond à la première face précitée.

La peau peut être collée sur le premier corps.

Elle peut être souple et notamment être en matériau polymérique tel qu'un silicone. Elle peut en variante être rigide et notamment être en métal, par exemple en acier. Par exemple, il s'agit d'une tôle emboutie.

Le premier corps peut présenter une face dotée d'un ou plusieurs reliefs et la peau déposée sur ladite face reproduit, sur sa face opposée au premier corps, la forme du ou des reliefs de la face du premier corps.

La peau peut présenter une épaisseur inférieure à 3 mm.

La peau peut comporter une plaque, au contact de la face du premier corps, et des connecteurs, qui font saillie de la plaque vers le corps et qui sont pris en masse dans celui-ci. Les connecteurs ancrent la peau dans le premier corps et réduisent le risque de séparation de la peau et du premier corps. De préférence, afin d'introduire les connecteurs dans le premier corps, la peau est appliquée sur le premier corps avant la prise du matériau cimentaire.

La peau peut comporter une couche de surface antiadhérente, du côté opposé au premier corps.

La couche de surface antiadhérente peut être en tout matériau facilitant la séparation des premier et deuxième éléments de structure. Lorsque le deuxième corps est imprimé au contact de la peau, la couche de surface est par exemple une cire de décoffrage.

Par ailleurs, des organes additionnels peuvent être disposés, notamment en saillie, sur la première face. Par exemple des pions de positionnement peuvent être montés sur la première face pour faciliter l'assemblage des éléments de structure et/ou une clé de cisaillement peut être rapportée sur la première face.

### Revêtement antiadhérent

Le procédé peut comporter le dépôt d'un revêtement antiadhérent sur le premier élément de structure, et la formation du deuxième élément de structure en superposition et au contact du premier élément de structure ainsi revêtu. Le revêtement antiadhérent facilite la séparation des premier et deuxième éléments de structure en fin d'étape c).

De préférence, le revêtement recouvre entièrement la face sur laquelle il est déposé.

Le revêtement antiadhérent peut être un film souple comportant un matériau antiadhérent appliqué, par exemple laminé, sur la première face. En variante, il peut être déposé par pulvérisation ou par enduction, par exemple au pinceau, d'une solution comportant un matériau antiadhérent.

Le matériau antiadhérent peut être choisi en fonction des matériaux qui définissent les première et deuxième faces en regard.

Par exemple, le matériau antiadhérent est une cire de décoffrage qui est adaptée à séparer deux corps dont au moins l'un est en matériau cimentaire.

L'épaisseur du revêtement antiadhérent est de préférence inférieure à 500 µm Une telle épaisseur est minime au regard des tolérances dimensionnelles de la structure et induit ainsi une faible erreur dimensionnelle, qui peut aisément être négligée lors de la conception de la structure.

Postérieurement à la séparation des premier de deuxième éléments de structure, le procédé peut comporter l'élimination du revêtement antiadhérent, par exemple par lavage, en particulier sous une haute pression, ou abrasion.

### Impression 3D du deuxième corps

Le deuxième corps peut être imprimé à l'étape b) sur le premier élément de structure après que la résistance mécanique du premier corps est suffisante pour supporter le poids du deuxième corps.

Le deuxième corps en matériau cimentaire est de préférence imprimé au contact du revêtement antiadhérent. La deuxième face précitée est ainsi la face du deuxième corps en matériau cimentaire qui vient au contact du revêtement antiadhérent ou de la peau du premier élément si celle-ci présente des propriétés antiadhérentes.

L'impression 3D du deuxième corps est de préférence menée de sorte que la face du deuxième corps opposée à la deuxième face présente au moins un relief. Par exemple, dans la variante où le deuxième élément de structure est formé sur le premier élément de structure, la face du deuxième corps opposée à la deuxième face est la face supérieure du deuxième corps.

Le deuxième corps peut recouvrir entièrement le revêtement antiadhérent.

Le relief de la deuxième face est de préférence obtenu par impression 3D d'un matériau cimentaire frais sur le relief de la première face.

Le procédé peut en outre comporter une étape de finition du deuxième élément de structure, qui vise à préparer la production d'un troisième élément de structure au contact de la face du deuxième élément de structure opposée au premier élément.

L'étape de finition du deuxième élément de structure peut comporter le lissage du matériau cimentaire à l'état frais formant la face du deuxième corps opposée au premier élément. Elle peut comporter l'usinage du matériau cimentaire ayant pris. En variante, elle peut comporter le dépôt d'une peau sur ladite face, comme décrit ci-dessus.

### Séparation des premier et deuxième éléments de structure

Dans le mode de mise en oeuvre préféré ou le deuxième élément de structure est formé sur le premier élément de structure, à l'étape c), le deuxième élément de structure peut être séparé du premier élément de structure.

La séparation peut être opérée par un mouvement relatif du deuxième élément de structure par rapport au premier élément. Par exemple, le premier élément de structure est séparé du deuxième élément par déplacement du support d'impression sur lequel il repose, le deuxième élément de structure étant maintenu dans une position fixe. En variante, le premier élément de structure est fixe et le deuxième élément de structure en est séparé par soulèvement, par exemple au moyen d'un engin de levage.

Le procédé peut ensuite comporter le retrait du premier élément de structure du support d'impression, par exemple au moyen d'un engin de manutention, l'envoi vers un lieu de stockage, puis la pose du deuxième élément de structure sur le support d'impression.

Un revêtement antiadhérent peut être déposé sur la face supérieure du deuxième élément de structure et un troisième élément de structure peut être produit sur le deuxième élément de structure ainsi revêtu, conformément aux étapes b) et c) du procédé. De cette manière, l'ensemble des éléments nécessaires à l'assemblage de la structure peut être fabriqué dans un atelier de hauteur sous plafond limitée, sans nécessité d'empiler l'ensemble des éléments de structure les uns sur les autres, et en assurant la complémentarité de forme des faces en regard de chaque couple d'éléments de structures contigus.

### Relevé géométrique

De préférence, préalablement à l'étape c) de séparation, le procédé comporte le relevé géométrique de points caractéristiques de l'ensemble formé par les premier et deuxième éléments de structure. Le relevé géométrique permet de contrôler, préalablement à l'assemblage, que d'une part chaque élément de structure individuellement et d'autre part l'assemblage des éléments de structure respectent les tolérances dimensionnelles prévues.

Le relevé géométrique de l'ensemble formé par les premier et deuxième éléments de structure peut notamment comprendre le relevé de points caractéristiques permettant d'enregistrer les positions relatives des premier et deuxième éléments de structure, par exemple sous forme vectorielle.

Ainsi, à chaque production d'un nouvel élément de structure, la géométrie de la structure à assembler peut être simulée, par exemple par addition des positions vectorielles relatives des éléments de structure déjà produits. En outre, les dimensions et/ou forme et/ou orientation des éléments de structure restant à produire peuvent ainsi être modifiées, par comparaison de la géométrie de la structure simulée avec le plan de la structure.

De préférence, le relevé géométrique de l'ensemble formé par les premier et deuxième éléments de structure comporte le relevé d'au moins deux, de préférence d'au moins trois, points caractéristiques de chacun des premier et deuxième éléments de structures.

Les points caractéristiques peuvent être répartis de manière homogène sur les premier et deuxième éléments.

Ils peuvent être répartis de sorte que, parmi l'ensemble des points caractéristiques des premier et deuxième éléments, la distance moyenne entre les points caractéristiques les plus proches soit maximale.

En particulier, le relevé géométrique peut être effectué au moyen d'une unité d'acquisition.

De préférence, l'unité d'acquisition est fixée sur le bâti. Ainsi, les coordonnées des points mesurées par l'unité d'acquisition et les coordonnées de points caractéristiques du bras articulé peuvent être définies dans un référentiel commun.

L'unité d'acquisition peut être un scanner 3D, tel un lidar, configuré pour acquérir un nuage de points représentant au moins une partie des premier et deuxième éléments de structure. Elle peut être un théodolite électronique, aussi dénommé station totale robotisée. Des cibles, par exemple des réflecteurs, peuvent être disposées sur les premier et deuxième éléments de structure, et optionnellement sur le bâti, et le relevé des points caractéristiques comporte la mesure des coordonnées des cibles. Au moins trois, de préférence au moins quatre cibles, par exemple des prismes, peuvent être réparties sur chaque élément de structure, et peuvent être distantes d'au moins 1 m les unes des autres, notamment afin d'estimer l'erreur géométrique.

Le procédé peut comporter la détermination de l'erreur géométrique à partir du relevé géométrique de l'ensemble formé par les premier et deuxième éléments de structure. L'erreur géométrique, aussi appelée erreur de construction, correspond à l'écart entre les coordonnées de points caractéristiques mesurées et les coordonnées correspondantes sur le plan de la structure.

En particulier, l'erreur géométrique peut être calculée au fur et à mesure de la fabrication de la pluralité d'éléments pour former la structure. Elle peut être calculée en comparant la géométrie de la structure telle que prévue par le plan avec la géométrie de la structure simulée, qui est obtenue par ajout des positions vectorielles relatives des éléments de structure déjà produits.

Préalablement à la production d'un troisième élément de structure sur le deuxième élément de structure, le procédé peut comporter le réglage de la position, notamment la hauteur, et/ou de l'orientation, notamment l'inclinaison, du support d'impression, suite ou préalablement à la pose du deuxième élément de structure sur le support d'impression, à partir du résultat du calcul de l'erreur géométrique. Un tel réglage permet ainsi de compenser l'erreur géométrique résultant de la fabrication des premier et deuxième éléments de structure, lors de la fabrication du troisième élément de structure. En répétant les étapes de fabrication des éléments de structure et de réglage pour compenser l'erreur géométrique lors de la production d'un nouvel élément de structure, le procédé résulte ainsi dans des éléments qui après assemblage, forment une structure conforme aux exigences dimensionnelles prévues par le plan.

En particulier, le réglage peut être effectué par rotation et/ou déplacement du support d'impression par rapport au bâti.

Le réglage peut être effectué au moyen d'au moins trois, voire d'au moins quatre vérins, reliant chacun le bâti au support d'impression. Le réglage de l'orientation du support d'impression peut comporter la rotation autour de deux axes de rotation, notamment contenus dans un plan horizontal, et de préférence perpendiculaires l'un à l'autre.

La production du troisième élément de structure comporte l'impression 3D d'un troisième corps. Le procédé peut comporter la modification des paramètres d'impression 3D du troisième corps en prenant en compte l'erreur géométrique. De cette façon, l'erreur géométrique peut être compensée lors de l'impression 3D du troisième corps.

En particulier, le dispositif d'impression peut modifier le modèle 3D du troisième élément de structure généré à partir du plan de la structure, en tenant compte de l'erreur géométrique.

Par ailleurs, le procédé peut comprendre le relevé géométrique du premier élément de structure, avant l'étape b), puis le relevé géométrique du deuxième élément de structure. Le relevé géométrique de chaque élément de structure permet de vérifier si la forme et les dimensions de chaque élément de structure sont conformes au plan de la structure.

### Structure

Les éléments de structure peuvent être destinés, lorsqu'assemblés, à former une structure en matériau cimentaire s'étendant selon un axe d'extension rectiligne ou curviligne, le rayon de courbure de l'axe d'extension de la structure étant notamment supérieur à 50 m.

La structure en matériau cimentaire peut être choisie parmi une colonne, une pile d'un pont, un tablier d'un pont, une poutre, un panneau, notamment une poutre caisson d'un tablier d'un pont, un réservoir, un bâtiment tel qu'une tour, et une partie d'un bâtiment, cette liste n'étant pas exhaustive.

L'invention concerne encore un procédé de construction d'une structure, comportant la mise en oeuvre du procédé de production selon l'invention pour produire des éléments de structure, suivi par l'assemblage des éléments de structure.

Les éléments de structure sont de préférence assemblés sur le site de construction.

L'assemblage peut comprendre le collage des éléments de structure contigus par application d'une colle sur les faces correspondantes.

Le procédé de construction, peut comprendre la mise en compression, selon l'axe d'extension de la structure, des éléments de structure assemblés.

Un système pour la mise en oeuvre du procédé selon l'invention peut comporter un dispositif d'impression 3D comportant une buse d'impression et un ordinateur pour commander le déplacement et l'alimentation en un matériau cimentaire de la buse d'impression afin de fabriquer des premier et deuxième éléments de structure.

De préférence, le système comporte :
- un support d'impression pour recevoir au moins le premier élément de structure, et
- une unité d'acquisition pour effectuer un relevé géométrique des premier et deuxième éléments de structure,
   l'ordinateur étant configuré pour
- modifier la position et/ou l'orientation du support d'impression en fonction du relevé géométrique, préalablement à et/ou au cours de la formation d'un troisième élément de structure au contact du deuxième élément de structure, et/ou
- modifier les paramètres d'impression 3D du troisième élément de structure en fonction du relevé géométrique.

Le système peut comporter des vérins reliés au support d'impression, l'ordinateur étant configuré pour actionner les vérins afin de modifier la position et/ou l'orientation du support.

Le système peut comporter un engin de levage pour séparer par soulèvement le deuxième élément de structure du premier élément de structure.

L'invention pourra être mieux comprise à la lecture de la description détaillée qui va suivre, d'exemples de mise en oeuvre non limitatifs de celle-ci, et à l'examen du dessin annexé, sur lequel :
[Fig. 1] la figure 1 illustre un exemple de mise en oeuvre d'une étape du procédé selon l'invention,
[Fig. 2] la figure 2 illustre une vue en coupe selon un plan vertical d'un exemple de premier élément de structure produit au cours de la mise en oeuvre du procédé,
[Fig. 3] la figure 3 illustre une vue en coupe selon un plan vertical de l'empilement d'un deuxième élément de structure sur un premier élément de structure produits au cours de la mise en oeuvre du procédé,
[Fig. 4] la figure 4 illustre un exemple de mise en oeuvre d'une étape du procédé,
[Fig. 5] la figure 5 illustre un exemple de mise en oeuvre d'une étape du procédé, et
[Fig. 6] la figure 6 est une vue en perspective d'une poutre caisson d'un tablier d'un pont.

Les proportions relatives des éléments illustrés dans le dessin annexé n'ont pas toujours été respectées dans un souci de clarté du dessin.

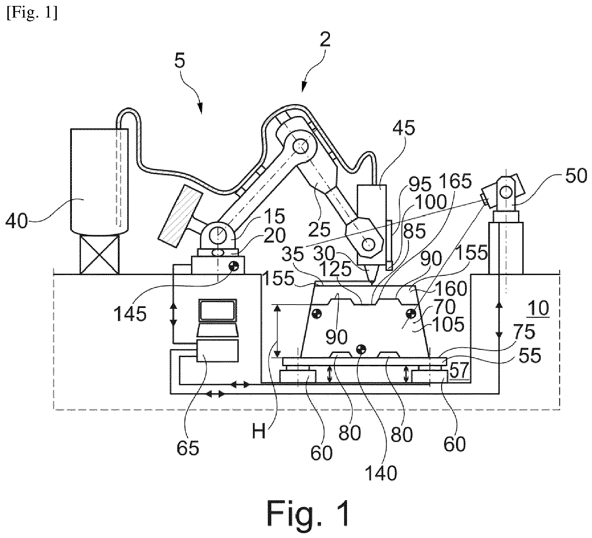

On a illustré à la figure 1 un exemple de mise en oeuvre de procédé selon l'invention.

Le procédé met en oeuvre au moyen d'un système 2 comportant un dispositif 5 d'impression 3D et un bâti 10. Le dispositif d'impression comporte un robot 15 comportant une base 20 portée par le bâti et un bras articulé 25 mobile par rapport à la base. Une buse d'impression 30 est montée sur le bras articulé pour déposer un cordon 35 de matériau cimentaire frais.

Le dispositif d'impression 3D peut comporter en outre une cuve 40 contenant une réserve de matériau cimentaire frais et une pompe 45 pour alimenter la buse d'impression en matériau cimentaire frais en provenance de la cuve.

Le système 2 peut comporter une unité d'acquisition 50 fixe par rapport au bâti, pour effectuer un relevé géométrique. Dans l'exemple illustré, l'unité d'acquisition comporte un théodolite robotisé. Dans une variante non représentée, elle peut comporter un scanner 3D ou tout autre moyen d'acquisition.

Le système 2 peut comporter encore un support d'impression 55 sous la forme d'une plaque métallique, reliée au bâti par l'intermédiaire de vérins 60. Ainsi, l'inclinaison et la hauteur du support d'impression par rapport au bâti peut être modifiée.

En particulier, notamment pour la fabrication d'un des éléments de l'extrémité de la structure, le support d'impression 55 peut être horizontal.

Le bras articulé 25 est suffisamment rigide pour que le dépôt du matériau cimentaire frais puisse être réalisé avec une précision suffisante au regard de la commande de pilotage du robot transmise par l'ordinateur. En particulier, le robot 15 peut comporter des capteurs pour mesurer des déformations et/ou jeux au sein des différents organes qui le constituent, et peut être configuré pour intégrer les déformations et/ou jeux dans le calcul de la commande de pilotage.

En outre, le bâti 10 et le support d'impression 55 sont suffisamment rigides pour que les déformations qu'ils subissent sous l'effet du poids du matériau cimentaire imprimé restent faibles au regard des tolérances de fabrication recherchées.

Le dispositif comporte encore un ordinateur 65 pour piloter le déplacement du bras articulé 25 et de la buse d'impression 30. L'ordinateur est en outre en communication avec l'unité d'acquisition 50, de laquelle il peut recevoir le relevé géométrique. Il est en outre configuré pour commander le déplacement des vérins 60, notamment en fonction des résultats du relevé géométrique, comme cela sera décrit ci-après.

L'ordinateur comporte une mémoire dans laquelle sont stockés le modèle 3D de la structure à produire et un logiciel d'impression comportant des instructions pour mener successivement les différentes séquences d'impression 3D à partir du modèle 3D. Il comporte en outre un processeur pour exécuter les instructions pour piloter le robot 15 et l'alimentation en matériau cimentaire frais.

La génération du modèle 3D est opérée préalablement à l'impression à partir du plan de la structure. Pour faciliter l'impression 3D, elle peut comporter la segmentation de la structure en éléments de structure. L'espacement entre les plans de coupe est notamment choisi en fonction de la forme de la structure. Par exemple, une structure sous la forme d'une poutre caisson d'un tablier d'un pont peut être segmentée en éléments de structure d'une longueur comprise entre 0,5 m et 5 m.

La segmentation peut être réalisée au moyen de plans de coupe perpendiculaires à l'axe d'extension de la structure.

La génération du modèle 3D peut être effectuée par le bureau d'étude en charge de la conception de la structure. Elle est préférablement effectuée au moyen du logiciel d'impression 3D. Ainsi, le dispositif d'impression 3D dispose, en donnée d'entrée, de la géométrie d'ensemble des éléments de structure dans un format adapté au procédé de fabrication additive.

Dans l'exemple illustré, l'amplitude de déplacement vertical du bras articulé 25 correspond sensiblement à la hauteur H d'un élément de structure. Pour fabriquer deux éléments de structures empilés l'un sur l'autre, le support d'impression 55 est disposé au fond d'une fosse 57 et le robot surplombe la fosse. Dans une variante non illustrée, où la somme des hauteurs de deux éléments de structure est inférieure à l'amplitude du bras, le robot est par exemple disposé sensiblement à la même altitude que le support d'impression.

L'ordinateur, suite au chargement du modèle 3D dans sa mémoire, commande le robot 15 de manière à procéder à l'impression 3D d'un matériau cimentaire frais pour former un premier corps 70 en matériau cimentaire sur le support d'impression 55.

En particulier, la face 75 du support d'impression sur laquelle le premier corps est formé peut comporter, comme cela est illustré, un ou plusieurs reliefs 80 faisant saillie verticalement de la face du support. Ainsi, un évidement peut être formé sur la face inférieure du premier élément de structure au contact du support d'impression. En variante, la face du support d'impression est plane.

Le déplacement de la buse d'impression et le dépôt de matériau cimentaire frais est opéré de manière que la face supérieure 85 du premier corps 70 opposée à la face au contact du support d'impression, soit sensiblement horizontale et présente en outre des reliefs 90 faisant saillie verticalement de la face supérieure et espacés l'un de l'autre. La formation de tels reliefs et leur nombre ne sont pas limitatifs.

Par ailleurs, dans l'exemple illustré sur la figure 1, un manche télescopique 95 doté à une extrémité d'un outil lisseur 100, par exemple une spatule, est monté sur le bras articulé.

Après impression et avant la prise du matériau cimentaire, le manche télescopique 95 est déployé et l'outil lisseur 100 est mis en contact avec la face supérieure 85 du premier corps 70. Un lissage de finition de la face supérieure est alors effectué pour conférer à la face supérieure 85 une rugosité similaire à celle d'une surface de matériau cimentaire moulé après décoffrage.

En variante, le lissage de finition peut être opérée au moyen d'une meule de rectification montée sur le bras télescopique 95. Après impression et prise du matériau cimentaire, le manche télescopique est déployé et la meule est appliquée sur la face supérieure du premier corps pour conférer l'état de surface souhaité à cette dernière.

Un premier élément de structure 105 est ainsi formé, qui comporte le premier corps 70 et optionnellement, des organes additionnels qui peuvent être montés sur le premier corps.

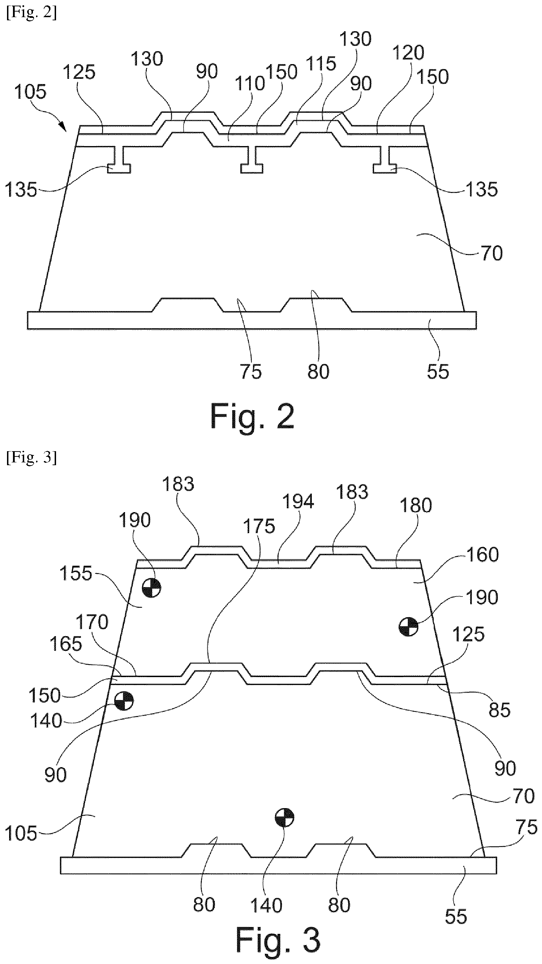

La figure 2 illustre un autre exemple de premier élément de structure 105, qui présente un premier corps 70 fabriqué comme selon l'exemple illustré sur la figure 1 et une peau 110 fixée sur le premier corps.

Après impression du premier corps et tant que le matériau cimentaire le formant est frais, la peau 110 est appliquée sur la face supérieure 85 du premier corps. La peau comporte une plaque 115, par exemple en un silicone, ayant une forme complémentaire de celle de la face supérieure 85. La peau souple épouse la forme des reliefs 90 formés sur la face supérieure 85 du premier corps. La face supérieure 120 de la peau définit ainsi une première face 125 du premier élément de structure 105 ayant un ou plusieurs reliefs en saillie 130.

La peau peut comporter en outre des connecteurs 135 faisant saillie de la plaque, introduits dans le matériau cimentaire frais. Après prise du matériau cimentaire, les connecteurs 135 sont ainsi pris en masse dans le matériau cimentaire de façon à retenir la peau 110 sur le premier corps 70. De préférence, la face supérieure 120 de la peau est lisse.

Après formation du premier élément de structure, des cibles 140 peuvent être disposées sur le premier élément de structure et un relevé géométrique du premier élément de structure est effectué par acquisition des cibles au moyen du système d'acquisition 50. Au moins une cible de référence 145 est disposée sur le bâti. Le relevé géométrique peut ainsi être référencé par rapport au bâti. Il peut ensuite être stocké dans l'ordinateur.

Un revêtement antiadhérent 150 est déposé sur la première face 125. Dans l'exemple illustré sur la figure 1, la première face 125 est la face supérieure 85 du premier corps 70. Dans l'exemple illustré sur la figure 2, la première face 125 est la face supérieure 120 de la peau 110.

Le revêtement antiadhérent peut être un film appliqué sur la première face. En variante, il peut être obtenu par simple enduction de la face supérieure du premier élément de structure, par exemple au moyen d'une brosse ou d'un embout applicateur enduit d'une solution antiadhérente ou par pulvérisation d'une telle solution. Un tel revêtement est mince et son épaisseur est par exemple inférieure ou égale à 2 mm.

Un deuxième élément de structure 155 est ensuite produit sur le premier élément de structure.

Sa production comporte la fabrication d'un deuxième corps 160 en matériau cimentaire par impression 3D d'un matériau cimentaire frais au contact du revêtement antiadhérent et sur ce dernier. Le revêtement antiadhérent prévient de toute accroche du deuxième corps sur le premier élément de structure. Ainsi, le deuxième corps 160 n'est pas lié rigidement au premier élément de structure 105.

La face inférieure 165 du deuxième élément de structure constitue une deuxième face 170, qui est en regard de la première face 125 et de forme complémentaire de celle-ci. Par ailleurs, l'impression 3D du deuxième corps 160 comporte le dépôt de matériau cimentaire sur les reliefs du premier élément de structure. En particulier, dans l'exemple illustré sur la figure 1, la face inférieure 165 du deuxième corps 160 présente notamment des reliefs en creux 175 de formes complémentaires de celles des reliefs 90 en saillie respectifs de la face supérieure 85 du premier élément de structure 70. Un joint conjugué peut ainsi être formé au sein de la structure assemblée, qui améliore la transmission des efforts entre les premier et deuxième éléments de structure.

Par ailleurs, le deuxième corps peut être imprimé de telle sorte que sa face supérieure 180 présente un ou plusieurs reliefs 183 comme illustré sur la figure 3.

La production du deuxième élément de structure peut comporter la finition de la face supérieure du deuxième élément de structure, par lissage ou usinage de la face supérieure du deuxième corps ou par dépôt d'une peau, comme décrit ci-dessus.

Des cibles 190 peuvent ensuite être disposées sur le deuxième élément de structure et un relevé géométrique de l'ensemble formé par les premier 105 et deuxième 155 éléments de structure peut être effectué. Dans une variante, l'unité d'acquisition comporte un scanner 3D et le relevé géométrique est effectué en scannant l'ensemble formé par les premier 105 et deuxième 155 éléments de structure, puis en traitant le résultat du scan par lasergrammétrie. Le relevé géométrique de l'ensemble est ensuite stocké dans l'ordinateur. L'erreur de construction, c'est-à-dire l'écart entre des côtes mesurées sur l'ensemble et prévues par le plan de la structure, peut ainsi être calculée et prise en compte pour la production d'un troisième élément de structure 185 sur le deuxième élément de structure 155, de sorte que le troisième élément de structure et que la structure comportant les premier, deuxième et troisième éléments de structure respecte les tolérances d'ensemble du plan de construction.

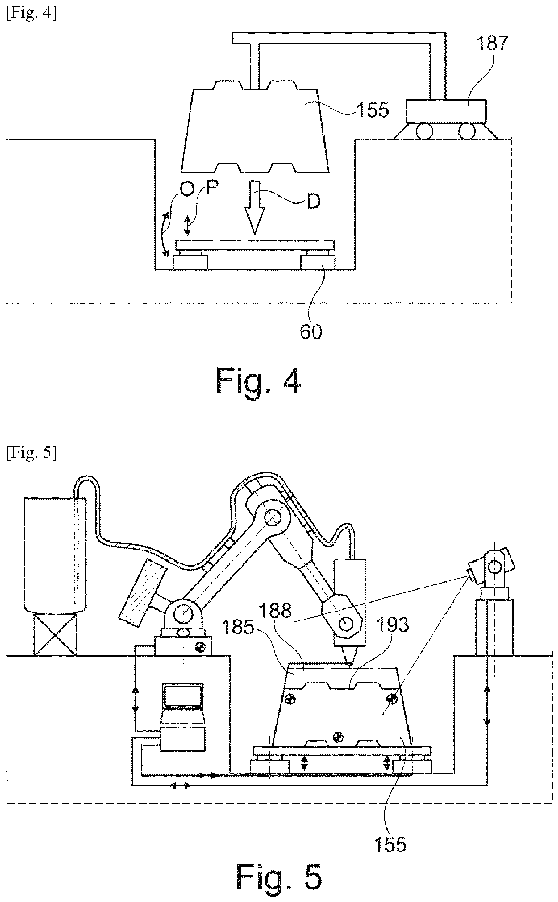

Comme illustré sur la figure 4, le deuxième élément de structure 155 est éloigné du premier élément de structure, par exemple par soulèvement au moyen d'un engin de levage 187. La présence du revêtement antiadhérent 150 à l'interface facilite cette séparation. Le premier élément de structure 105 est ensuite extrait du support d'impression 55 peut être transféré vers un lieu de stockage.

Le cas échéant, l'ordinateur, sur la base de la mesure de l'erreur de construction, commande les vérins 60 pour modifier la position P et/ou l'orientation O du support d'impression 55, de façon à compenser l'erreur de construction pour la production du troisième élément de structure.

L'erreur géométrique peut être introduite comme une donnée d'entrée du logiciel d'impression 3D. L'ordinateur peut ainsi corriger la commande de pilotage du bras articulé et de la buse d'impression en fonction de l'erreur de construction, de sorte à compenser cette dernière pour la production du troisième élément de structure.

L'erreur de construction peut être compensée par une modification de la position et/ou de l'orientation du support et par une correction de la commande de pilotage du bras articulé et de la buse d'impression.

Le deuxième élément de structure 155 est ensuite ou préalablement déposé par l'engin de levage 187 sur le support d'impression, comme indiqué par la flèche D.

Comme illustré sur la figure 5, le deuxième élément de structure 155 définit alors une face de coffrage 193 pour la fabrication du troisième élément de structure 185, selon une mise en oeuvre similaire aux étapes décrites ci-dessus. Notamment, la face supérieure 180 du deuxième corps peut être recouverte d'un revêtement antiadhérent 194 et un troisième corps 188 d'un troisième élément de structure 185 peut être imprimé au contact de cette face munie du revêtement antiadhérent.

Au moins une partie, voire l'intégralité de la structure peut être ainsi fabriquée. L'assemblage de la structure peut ensuite être réalisé sur le site de construction.

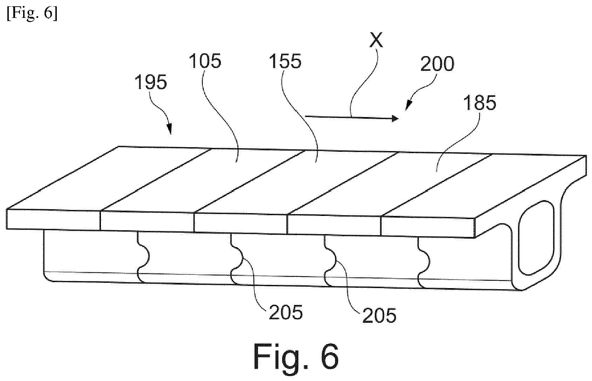

Un exemple de structure 195 est représenté sur la figure 6. Il s'agit d'une poutre caisson d'un tablier de pont assemblée à partir d'un ensemble 200 d'éléments de structure 105, 155, 185 fabriqués selon l'invention. Les éléments de structure fabriqués verticalement comme décrit ci-dessus sont assemblés selon l'axe d'extension X horizontal de la poutre caisson, leurs première 125 et deuxième 170 faces respectives étant disposées en regard. Les faces en regard présentant des formes complémentaires, des joints conjugués 205 sont ainsi formés aux interfaces entre les éléments de structure contigus.

## Revendications

1. Procédé de production d'une pluralité d'éléments de structure, en vue de former après assemblage au moins une partie d'une structure (195) en matériau cimentaire, le procédé comportant:
a) la production d'un premier élément de structure (105) comportant l'impression 3D d'un premier corps (70) en matériau cimentaire,
b) la production d'un deuxième élément de structure (155) au contact du premier élément de structure, comportant l'impression 3D d'un deuxième corps (160) en matériau cimentaire, les premier et deuxième éléments de structure présentant des faces en regard, respectivement dénommées « première face » (125) et « deuxième face » (170), de formes complémentaires, et
c) la séparation des premier et deuxième éléments de structure.

2. Procédé selon la revendication 1, les première (125) et deuxième (170) faces étant perpendiculaires à l'axe d'extension (X) de la structure obtenue par assemblage des éléments de structure.

3. Procédé selon l'une quelconque des revendications 1 et 2, le deuxième élément de structure (155) étant fabriqué sur le premier élément de structure (105).

4. Procédé selon l'une quelconque des revendications précédentes, l'une des première et deuxième faces présentant un relief (90) en saillie logé dans un relief en creux (175) de l'autre des première et deuxième faces, le relief en creux et le relief en saillie étant de préférence de formes complémentaires.

5. Procédé selon l'une quelconque des revendications précédentes, comportant une étape de finition de la première face, de préférence la première face (125) étant la face (85) du premier corps (70) au contact de laquelle le deuxième élément de structure (155) est formé, la finition comportant :
- le déplacement d'un outil lisseur (100) sur la première face, au contact du matériau cimentaire frais, ou
- le déplacement d'un outil d'usinage, par exemple une meule de rectification, sur la première face au contact du matériau cimentaire ayant pris,
et/ou de préférence la finition comportant l'application d'une peau (110) sur une face du premier corps en matériau cimentaire, la peau recouvrant au moins partiellement, voire totalement la face du premier corps, la peau présentant une face au contact du premier corps et une face opposée (120) constituant ladite première face (125).

6. Procédé selon l'une quelconque des revendications précédentes, comportant le dépôt d'un revêtement antiadhérent (150) sur le premier élément de structure, et la formation du deuxième élément de structure en superposition et au contact du premier élément de structure ainsi revêtu, de préférence le revêtement antiadhérent (150) étant déposé par pulvérisation ou par enduction, par exemple au moyen d'une brosse ou d'un embout applicateur, d'une composition comportant un matériau antiadhérent, par exemple une cire de décoffrage adaptée à séparer deux corps dont au moins l'un est en matériau cimentaire.

7. Procédé selon la revendication 6, le deuxième corps (160) étant imprimé au contact du revêtement antiadhérent (150).

8. Procédé selon l'une quelconque des revendications précédentes, l'impression 3D du deuxième corps étant menée de sorte que la face (180) du deuxième corps (160) opposée à ladite deuxième face (170) présente au moins un relief (183).

9. Procédé selon l'une quelconque des revendications précédentes, comportant le relevé géométrique de points caractéristiques de l'ensemble formé par les premier (105) et deuxième (155) éléments de structure et/ou comportant un relevé géométrique effectué en scannant l'ensemble formé par les premier (105) et deuxième (155) éléments de structure, puis en traitant le résultat du scan par lasergrammétrie, le procédé comportant de préférence le calcul de l'erreur géométrique à partir du relevé géométrique de l'ensemble formé par les premier et deuxième éléments de structure.

10. Procédé selon l'une quelconque des revendications précédentes, prise en dépendance avec la revendication 3, le deuxième élément de structure étant séparé par soulèvement du premier élément de structure à l'étape c), le procédé comportant de préférence ensuite le retrait du premier élément de structure d'un support d'impression sur lequel repose le premier élément de structure, suivi de la pose du deuxième élément de structure sur le support d'impression.

11. Procédé selon la revendication précédente, comportant le dépôt d'un revêtement antiadhérent sur la face supérieure (180) du deuxième élément de structure et la production d'un troisième élément de structure (185) sur le deuxième élément de structure (155) ainsi revêtu.

12. Procédé selon la revendication 11 prise en dépendance avec la revendication 9, la production du troisième élément de structure (185) comportant l'impression 3D d'un troisième corps (188), le procédé comportant la modification des paramètres d'impression 3D du troisième corps en prenant en compte l'erreur géométrique.

13. Procédé selon l'une quelconque des revendications 11 et 12, prise en dépendance avec la revendication 9, comportant le réglage de la position et/ou de l'orientation du support d'impression, suite ou préalablement à la pose du deuxième élément de structure sur le support d'impression, à partir du résultat du calcul de l'erreur géométrique.

14. Procédé de construction d'une structure, comportant la mise en oeuvre du procédé de production selon l'une quelconque des revendications précédentes pour produire des éléments de structure, suivi par l'assemblage des éléments de structure, les éléments de structure étant de préférence assemblés sur le site de construction.

## Patentansprüche

1. Verfahren zur Herstellung einer Mehrzahl von Strukturelementen, um nach dem Zusammenfügen mindestens einen Teil einer Struktur (195) aus Zementmaterial zu bilden, wobei das Verfahren umfasst:
a) das Herstellen eines ersten Strukturelements (105), umfassend den 3D-Druck eines ersten Körpers (70) aus Zementmaterial,
b) das Herstellen eines zweiten Strukturelements (155) in Kontakt mit dem ersten Strukturelement, umfassend den 3D-Druck eines zweiten Körpers (160) aus Zementmaterial, wobei die ersten und zweiten Strukturelemente gegenüberliegende Seiten, "erste Seite" (125) beziehungsweise "zweite Seite" (170) genannt, mit komplementären Formen aufweisen, und
c) das Trennen der ersten und zweiten Strukturelemente.

2. Verfahren nach Anspruch 1, wobei die ersten (125) und zweiten (170) Seiten senkrecht zu der Erstreckungsachse (X) der Struktur verlaufen, die durch Zusammenfügen der Strukturelemente erhalten wird.

3. Verfahren nach einem der Ansprüche 1 und 2, wobei das zweite Strukturelement (155) auf dem ersten Strukturelement (105) gefertigt wird.

4. Verfahren nach einem der vorhergehenden Ansprüche, wobei eine der ersten und zweiten Seiten ein erhabenes Relief (90) aufweist, das in einem vertieften Relief (175) der anderen der ersten und zweiten Seiten aufgenommen ist, wobei das vertiefte Relief und das erhabene Relief bevorzugt komplementäre Formen haben.

5. Verfahren nach einem der vorhergehenden Ansprüche, umfassend einen Schritt der Endbearbeitung der ersten Seite, wobei die erste Seite (125) bevorzugt die Seite (85) des ersten Körpers (70) ist, in Kontakt mit welcher das zweite Strukturelement (155) gebildet wird, wobei die Endbearbeitung umfasst:
- das Bewegen eines Glättwerkzeugs (100) auf der ersten Seite, in Kontakt mit dem frischen Zementmaterial, oder
- das Bewegen eines Bearbeitungswerkzeugs, zum Beispiel einer Schleifscheibe, auf der ersten Seite in Kontakt mit dem abgebundenen Zementmaterial,
und/oder wobei die Endbearbeitung bevorzugt das Applizieren einer Haut (110) auf eine Seite des ersten Körpers aus Zementmaterial umfasst, wobei die Haut die Seite des ersten Körpers mindestens teilweise oder sogar vollständig bedeckt, wobei die Haut eine Seite in Kontakt mit dem ersten Körper (120) und eine entgegengesetzte Seite, welche die erste Seite (125) darstellt, aufweist.

6. Verfahren nach einem der vorhergehenden Ansprüche, umfassend das Aufbringen einer Antihaftbeschichtung (150) auf das erste Strukturelement und das Bilden des zweiten Strukturelements in Überlagerung und in Kontakt mit dem so beschichteten ersten Strukturelement, wobei die Antihaftbeschichtung (150) bevorzugt durch Sprühen oder durch Streichen, zum Beispiel mittels eines Pinsels oder eines Applikatorendstücks, einer Zusammensetzung aufgebracht wird, die ein Antihaftmaterial umfasst, zum Beispiel ein Entschalungswachs, das geeignet ist, zwei Körper zu trennen, von denen mindestens einer aus Zementmaterial ist.

7. Verfahren nach Anspruch 6, wobei der zweite Körper (160) in Kontakt mit der Antihaftbeschichtung (150) gedruckt wird.

8. Verfahren nach einem der vorhergehenden Ansprüche, wobei der 3D-Druck des zweiten Körpers so durchgeführt wird, dass die Seite (180) des zweiten Körpers (160), die zu der zweiten Seite (170) entgegengesetzt ist, mindestens ein Relief (183) aufweist.

9. Verfahren nach einem der vorhergehenden Ansprüche, umfassend die geometrische Vermessung von charakteristischen Stellen der durch die ersten (105) und zweiten (155) Strukturelemente gebildeten Anordnung und/oder umfassend eine geometrische Vermessung, die durchgeführt wird, indem die durch die ersten (105) und zweiten (155) Strukturelemente gebildete Anordnung gescannt wird, indem dann das Ergebnis des Scans durch Lasergrammetrie bearbeitet wird, wobei das Verfahren bevorzugt die Berechnung des geometrischen Fehlers anhand der geometrischen Vermessung der durch die ersten und zweiten Strukturelemente gebildeten Anordnung umfasst.

10. Verfahren nach einem der vorhergehenden Ansprüche in Abhängigkeit von Anspruch 3, wobei das zweite Strukturelement durch Anheben des ersten Strukturelements im Schritt c) getrennt wird, wobei das Verfahren bevorzugt anschließend das Entfernen des ersten Strukturelements von einem Druckträger, auf dem das erste Strukturelement aufliegt, gefolgt von dem Setzen des zweiten Strukturelements auf den Druckträger umfasst.

11. Verfahren nach dem vorhergehenden Anspruch, umfassend das Aufbringen einer Antihaftbeschichtung auf die Oberseite (180) des zweiten Strukturelements und das Herstellen eines dritten Strukturelements (185) auf dem so beschichteten zweiten Strukturelement (155).

12. Verfahren nach Anspruch 11 in Abhängigkeit von Anspruch 9, wobei das Herstellen des dritten Strukturelements (185) den 3D-Druck eines dritten Körpers (188) umfasst, wobei das Verfahren die Änderung der 3D-Druck-Parameter des dritten Körpers unter Berücksichtigung des geometrischen Fehlers umfasst.

13. Verfahren nach einem der Ansprüche 11 und 12 in Abhängigkeit von Anspruch 9, umfassend das Einstellen der Position und/oder der Ausrichtung des Druckträgers, nach oder vor dem Setzen des zweiten Strukturelements auf den Druckträger, anhand des Ergebnisses der Berechnung des geometrischen Fehlers.

14. Verfahren zur Errichtung einer Struktur, umfassend die Durchführung des Herstellungsverfahrens nach einem der vorhergehenden Ansprüche, um Strukturelemente herzustellen, gefolgt von dem Zusammenfügen der Strukturelemente, wobei die Strukturelemente bevorzugt am Errichtungsort zusammengefügt werden.

## Claims

1. Method for producing a plurality of structural elements in order to form, after assembly, at least a part of a structure (195) made of cementitious material, the method involving:
a) the production of a first structural element (105) involving the 3D printing of a first body (70) made of cementitious material,
b) the production of a second structural element (155) in contact with the first structural element, involving the 3D printing of a second body (160) made of cementitious material,
the first and second structural elements having facing faces, known as the "first face" (125) and "second face" (170), respectively, with complementary shapes, and
c) the separation of the first and second structural elements.

2. Method according to Claim 1, the first (125) and second (170) faces being perpendicular to the axis of extension (X) of the structure obtained by assembling the structural elements.

3. Method according to either one of Claims 1 and 2, the second structural element (155) being manufactured on the first structural element (105).

4. Method according to any one of the preceding claims, one of the first and second faces having a protruding relief (90) accommodated in a recessed relief (175) in the other of the first and second faces, the recessed relief and the protruding relief preferably having complementary shapes.

5. Method according to any one of the preceding claims, involving a step of finishing the first face, the first face (125) preferably being the face (85) of the first body (70) in contact with which the second structural element (155) is formed, the finishing involving:
- moving a smoothing tool (100) over the first face, in contact with the fresh cementitious material, or
- moving a machining tool, for example a grinding wheel, over the first face in contact with the set cementitious material,
and/or the finishing preferably involving the application of a skin (110) to a face of the first body made of cementitious material, the skin at least partially, or even entirely, covering the face of the first body, the skin having a face in contact with the first body and an opposite face (120) constituting said first face (125).

6. Method according to any one of the preceding claims, involving the deposition of a non-stick coating (150) on the first structural element, and the formation of the second structural element superposed on and in contact with the first structural element thus coated, the non-stick coating (150) preferably being deposited by spraying or by coating, for example by means of a brush or an applicator end piece, with a composition comprising a non-stick material, for example a stripping wax suitable for separating two bodies, at least one of which is made of cementitious material.

7. Method according to Claim 6, the second body (160) being printed in contact with the non-stick coating (150) .

8. Method according to any one of the preceding claims, the 3D printing of the second body being carried out such that the face (180) of the second body (160) on the opposite side from said second face (170) has at least one relief (183).

9. Method according to any one of the preceding claims, involving the geometric survey of characteristic points of the assembly formed by the first (105) and second (155) structural elements and/or involving a geometric survey carried out by scanning the assembly formed by the first (105) and second (155) structural elements, then processing the results of the scan by lasergrammetry, the method preferably involving the calculation of the geometric error from the geometric survey of the assembly formed by the first and second structural elements.

10. Method according to any one of the preceding claims, when dependent on Claim 3, the second structural element being separated from the first structural element in step c) by lifting, the method preferably then involving the removal of the first structural element from a printing substrate on which the first structural element rests, followed by the placement of the second structural element on the printing substrate.

11. Method according to the preceding claim, involving the deposition of a non-stick coating on the upper face (180) of the second structural element and the production of a third structural element (185) on the second structural element (155) thus coated.

12. Method according to Claim 11 when dependent on Claim 9, the production of the third structural element (185) involving the 3D printing of a third body (188), the method involving the modification of the 3D printing parameters of the third body, taking into account the geometric error.

13. Method according to either one of Claims 11 and 12, when dependent on Claim 9, involving the adjustment of the position and/or the orientation of the printing substrate, following or before the placement of the second structural element on the printing substrate, on the basis of the result of the geometric error calculation.

14. Method for constructing a structure, involving the implementation of the production method according to any one of the preceding claims in order to produce structural elements, followed by the assembly of the structural elements, the structural elements preferably being assembled at the construction site.
